# EUROPEAN PATENT APPLICATION

(11) **EP 4 224 203 A2**
(43) Date of publication of application: **09.08.2023**
(21) Application number: 22190616.7
(22) Date of filing: 16.08.2022
(51) Int. Cl.: G01S 7/481, G01S 7/486, G01S 7/487, G01S 7/497, G01S 17/89

(54) **IMAGING LIDAR APPARATUS AND METHODS FOR OPERATION IN DAY-LIGHT CONDITIONS**

(30) Priority: 24.08.2021 EP 21192766
(71) Applicant: CSEM Centre Suisse d'Electronique et de Microtechnique SA - Recherche et Développement, 2002 Neuchâtel (CH)
(72) Inventor: PACHE, Christophe, 2017 Boudry (CH); DROZ-DIT-BUSSET, Fabien, 2075 Thielle (CH); POLLINI, Alexandre, 2072 St-Blaise (CH)
(74) Representative: e-Patent SA

(57) **Abstract**

The invention relates to an imaging LIDAR system (100) comprising
- a unique light source consisting of a monochromatic laser source (2), emitting a laser signal having a first wavelength,
- a projection system (3) configured to project the laser signal as a divergent beam (20) towards a monitored scene (120),
- a collecting optical system (5) configured to collect a reflected laser signal (21) from the monitored scene (120) and to produce an image (121) of the monitored scene (120) on an imaging photodetector (8) comprising a plurality of pixels,
- an optical band-pass interferential filter (6) having a characteristic second wavelength corresponding to the centre of the filter transmission band in normal incidence conditions, the first wavelength being lower than the second wavelength, and this filter being disposed along the optical path, between the monitored scene (120) and the imaging photodetector (8).

## Description

### Technical Field

The invention is in the field of light-detection and ranging (LIDAR). More specifically it concerns LIDAR systems provided with an imaging detector (imaging LIDAR). The invention addresses the problem of operating such systems in conditions of significant light background, as typically found in day-light outdoor situations.

More precisely, the invention relates to methods of background-light suppression based on narrow-bandwidth spectral filtering. In particular, the invention concerns an apparatus or system and methods for reducing the variability of the spectral filtering efficiency across the angular field of view of the imaging system.

### State of the art

Light detection and ranging (LIDAR) is an optical detection technique for measuring the distance to a remote target. A pulsed or modulated laser source is used to illuminate the target. The reflected light is collected, and the distance to the target is calculated based on phase-shift or time-of-flight analysis.

Most LIDAR systems are provided with a single-pixel photodetector and use a collimated laser beam to measure the distance to a target in the direction where the laser beam is pointed. In contrast to this approach, an imaging LIDAR uses a divergent laser beam to illuminate a scene. A collecting optical system comprising imaging optics is used to create an image of the observed scene on a photodetector comprising multiple pixels. In this way, an imaging LIDAR detects not only the distance to an object in a specific direction, but creates a complete 3D image of the monitored scene within a defined angular field of view.

A common problem in LIDAR technology, is the presence of background light, especially when operating in day-light conditions. In order to improve the signal-to-noise ratio (SNR) of the reflected laser signal, the ambient light is usually supressed by spectral filtering. The laser sources typically used in LIDAR applications have spectral widths ranging from a few nanometers down to picometers. A narrow band-pass optical filter can be used to selectively let the laser light through the collection system, while blocking other wavelengths. This principle has been widely used in LIDAR systems for many years.

A common choice for a narrow bandpass optical filter is an interferential filter, which can provide very narrow and sharp transmission bands. A known property of this type of filters, is the sensitive dependency of the transmitted wavelength on the angle of incidence. In US10627493B2, this property is advantageously used to adapt the transmission band of the filter to the wavelength of the laser source. As the temperature of the laser source changes due to environmental conditions, the laser wavelength drifts, but the interferential filter is tilted in order to keep its transmission band centred on the drifting laser wavelength.

The angular dependency of the transmission properties of an interferential filter, constitutes on the other hand a problem for imaging LIDAR systems, in particular when large angular fields of view are considered. In this case the collected light that is imaged does not reach the photodetector as a collimated beam with a unique angle of incidence. On the contrary, each pixel receives a converging beam propagating from a different direction. Interposing an interferential filter in the propagation of these beams may result in image vignetting. This happens, for example, when the signal is efficiently collected within a certain area in the middle of the image but gradually attenuates towards the periphery.

One approach for circumventing this problem is proposed in WO2020/243130A1. In this document, an imaging LIDAR system is disclosed, comprising an emission source configured to produce optical signals at different wavelengths. The signals of different wavelengths are directed over different portions of the field of view. The angular dependency of the emitted wavelength is configured to match the angular dependency of the bandpass filter on the detection side.

The preferred embodiment of the emission source disclosed in this document comprises an array of emitter elements, in particular LEDs or laser diodes with different characteristic wavelengths. This must be combined with an optical arrangement configured to direct the signals of the different emitters towards different portions of the field of view, all of this introducing significant complexity in the LIDAR system.

In one alternative embodiment, the use of broadband sources is also suggested, although not thoroughly described. While a broadband source may be easier to produce than an array of different emitter elements, the subsequent optical arrangement for separating the wavelengths in different angles such as to match the transmission properties of the bandpass filter may be significantly more complex. Also, the energy efficiency of such a configuration would be extremely poor when narrow bandpass filters are used.

There is thus a need for an imaging LIDAR system providing good homogeneity of sensitivity over the whole field of view, while having a simplified construction and an improved energy efficiency in comparison with the known systems. The present invention addresses this problem.

### Disclosure of the invention

An aim of the invention is to propose an imaging LIDAR system which minimizes the vignetting effects caused by the angular dependency of the transmitted wavelength in an interferential band-pass optical filter without relying on complex or energy inefficient polychromatic light sources.

More specifically, the invention relates to such an imaging LIDAR system comprising:
- a unique light source consisting of a monochromatic laser source, emitting a laser signal having a first wavelength, a projection system configured to project the laser signal as a divergent beam towards a monitored scene,
- a collecting optical system configured to collect a reflected laser signal from the monitored scene and to produce an image of the monitored scene on an imaging photodetector comprising a plurality of pixels,
- an optical band-pass interferential filter having a characteristic second wavelength corresponding to the centre of the filter transmission band in normal incidence conditions, this filter being disposed along the optical path, between the monitored scene and the imaging photodetector.

More particularly, the imaging LIDAR system according to the invention is characterized by the fact that the first wavelength is lower than the second wavelength.

Though this last feature can be simply stated, it results from complex experimentations conducted by the Applicant in order to identify preferred conditions corresponding to a preferred compromise between many possible sets of parameters leading to diverse results and varying satisfaction levels.

Advantageously, the difference between the first wavelength and the second wavelength may be in a range from 0.1 to 2 nm, preferably between 0.2 and 1 nm.

The notion of "monochromatic" laser source deserves clarification, since, strictly speaking, there can be no perfectly monochromatic light. In the context of this document and in line with the common interpretation of the skilled person, a laser source would be regarded as monochromatic when its spectral linewidth is narrower than 0.5 nm, and preferably narrower than 0.1 nm. Also, it must be understood, that when we refer to the "wavelength of the laser signal", it corresponds to the central wavelength of its narrow emission band.

According to a preferred embodiment, the imaging LIDAR system may further comprise an adjusting system to adjust the first wavelength and/or an adjusting system to adjust the second wavelength.

In that case, the adjusting system for adjusting the first wavelength may comprise any of:
- a temperature control of the laser source, or
- an intracavity actuator within the laser source, such as an orientable diffraction grating or prism, or
- a driving current control of the laser source.

As an alternative or a complement, the adjusting system for adjusting the second wavelength may comprise any of:
- Electro-mechanic actuators applying pressure on the interferential filter, or
- Electro-optic actuators controlling the index of refraction of the layers constituting the interferential filter, or
- a temperature control of the interferential filter.

On a general basis, the imaging LIDAR system may further comprise an additional optical filter disposed along the optical path, between the monitored scene and the imaging photodetector, and featuring a spatially modulated transmittance which is complementary to a non-uniform transmission profile resulting from the spectral filtering of the interferential filter, such as to obtain an overall substantially homogeneous transmission of the laser signal which is collected across the field of view of the imaging LIDAR system.

In that case, the additional optical filter may be one of:
- a neutral density variable reflective filter, or
- a neutral density variable absorptive filter, or
- an adjustable spatial light modulator, or
- an adjustable liquid crystal display.

More generally, the imaging LIDAR system may be arranged such that the individual read-out gain of the different pixels of the imaging photodetector can be adjusted such as to compensate a non-uniform transmission profile resulting from the spectral filtering of the interferential filter, and to obtain an overall substantially homogeneous transmission of the laser signal which is collected across the field of view of the imaging LIDAR system.

The present invention also relates to a method of operating an imaging LIDAR system comprising:
- a unique light source consisting of a monochromatic laser source emitting a laser signal having a first wavelength, a projection system configured to project the laser signal as a divergent beam towards a monitored scene,
- a collecting optical system configured to collect a reflected laser signal from the monitored scene and to produce an image of the monitored scene on an imaging photodetector comprising a plurality of pixels,
- an optical band-pass interferential filter having a characteristic second wavelength corresponding to the centre of the filter transmission band, this filter being disposed along the optical path, between the monitored scene and the imaging photodetector, and
- an adjusting system to adjust the first wavelength and/or an adjusting system to adjust the second wavelength,
wherein the method comprises the step of adjusting the first wavelength and/or the second wavelength such that the first wavelength is lower than the second wavelength.

Advantageously, the difference between the first wavelength and the second wavelength may be adjusted in a range from 0.1 to 2 nm, preferably between 0.2 and 1 nm.

According to a preferred embodiment, adjusting the first wavelength and/or the second wavelength comprises the steps of:
- operating the imaging LIDAR system to obtain an image of a scene or of a calibration target, then
- scanning the first wavelength and/or the second wavelength to identify an operating setpoint of the first and/or the second wavelength which provides an optimal intensity contrast across the image acquired by the imaging photodetector.

In that case, an optimization criterion of the optimal intensity contrast may be defined either by an operator of the imaging LIDAR system or by an image processing algorithm.

Generally, when the imaging LIDAR system further comprises an additional optical filter, disposed along the optical path, between the monitored scene and the imaging photodetector, and when the additional optical filter features a spatially modulated transmittance which can be adjusted, the method may preferably comprise a step of adjusting the transmittance of the additional optical filter to obtain an overall substantially homogeneous transmission of the laser signal which is collected across the field of view of the imaging LI DAR system.

Alternately, the method may further comprise a step of adjusting the individual read-out gain of the different pixels of the imaging photodetector to obtain an overall substantially homogeneous transmission of the laser signal which is collected across the field of view of the imaging LIDAR system.

The present invention further relates to an imaging LIDAR system comprising:
- a unique light source consisting of a monochromatic laser source emitting a laser signal having a first wavelength,
- a projection system configured to project the laser signal as a divergent beam towards a monitored scene,
- a collecting optical system configured to collect a reflected laser signal from the monitored scene and to produce an image of the monitored scene on an imaging photodetector comprising a plurality of pixels,
- an optical band-pass interferential filter having a characteristic transmission band encompassing the first wavelength, the filter being disposed along the optical path, between the monitored scene and the imaging photodetector,
wherein the imaging LIDAR system further comprises an additional optical filter disposed along the optical path, between the monitored scene and the imaging photodetector, and featuring a spatially modulated transmittance which is complementary to a non-uniform transmission profile resulting from the spectral filtering of the interferential filter, such as to obtain an overall substantially homogeneous transmission of the laser signal which is collected across the field of view of the imaging LIDAR system.

Finally, the present invention also relates to an imaging LIDAR system comprising:
- a unique light source consisting of a monochromatic laser source emitting a laser signal having a first wavelength,
- a projection system configured to project the laser signal as a divergent beam towards a monitored scene,
- a collecting optical system configured to collect a reflected laser signal from the monitored scene and to produce an image of the monitored scene on an imaging photodetector comprising a plurality of pixels,
- an optical band-pass interferential filter having a characteristic transmission band encompassing the first wavelength, this filter being disposed along the optical path, between the monitored scene and the imaging photodetector,
wherein the individual read-out gain of the different pixels of the imaging photodetector can be adjusted such as to compensate a non-uniform transmission profile resulting from the spectral filtering of the interferential filter, and to obtain an overall substantially homogeneous transmission of the laser signal which is collected across the field of view of the imaging LIDAR system.

On a general basis, it might be advantageous to provide the imaging LIDAR system with a monochromatic laser source configured so as to be able to generate pulses having a duration comprised between 0.4 ns and 5 ns and, preferably, a pulse energy in the micro-Joule (µJ) range, more preferably between 0.2 µJ and 20 µJ.

### Brief description of the drawings

Further details of the invention will appear more clearly upon reading the description below, in connection with the following figures which illustrate:
- Fig. 1: schematics of an imaging LIDAR apparatus according to an exemplary embodiment of the present invention;
- Figs. 2a and 2b: qualitative graphical representations of the interrelation between the laser wavelength, the angle of incidence and the transmission of a flat interferential narrow bandpass optical filter;
- Figs. 3a, 3b and 3c: qualitative graphical representations of the effect of implementing a method of the present invention on the imaging of a monitored scene;
- Fig. 4: schematic representation of a possible embodiment of the method of the present invention.

### Embodiments of the invention

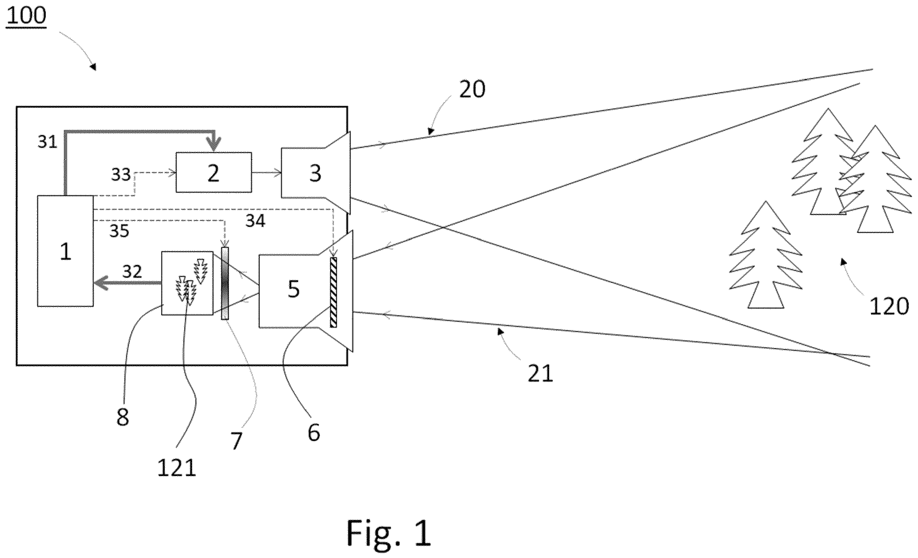

An example of an imaging LIDAR system 100 according to the invention is shown in Fig. 1. It comprises a unique light source consisting of a monochromatic laser source 2 and a projection system 3 configured to project a divergent laser beam 20 towards an object or a scene 120 that is monitored. As previously stated, the monochromatic laser source 2 according to the present invention has a spectral linewidth narrower than 0.5 nm, and preferably narrower than 0.1 nm.

Laser light 21 reflected from the scene 120 is collected by a collecting optical system 5 which comprises standard optical elements (e.g. lenses or curved mirrors, not shown in the figure) that create an image 121 of the monitored scene 120 on a photodetector 8. The photodetector 8 is a matrix detector comprising a plurality of pixels to capture spatial information related to the scene 120.

The imaging LIDAR system 100 further comprises electronic means 1 to perform the tasks of driving the laser source 2 (symbolized by arrow 31), reading-out a signal 32 of the photodetector 8, and controlling different elements of the system. Fig. 1 explicitly symbolizes the control signals 33, 34 and 35, which will be presented in relation to specific embodiments described below.

The system electronic means 1 are mentioned here as a generic feature of any LIDAR apparatus. Different configurations of these, as known by the person skilled in the art, can be implemented without departing from the scope of the present invention. In particular, the methods of performing the time-of-flight measurements, or the nature of the laser beam with pulsed or modulated illumination may take different forms without a direct impact on the implementation of the present invention.

The system electronic means 1 can be implemented as a single integrated unit or as several parts or distinct components. Likewise, the other components of the imaging LIDAR system 100, can be packaged in a compact unit, as depicted in Fig. 1, or be separated in independent modules. For example, the laser source 2, could be in a remote enclosure and its output light be transferred to the projection system 3 by an optical fibre. Additionally, the collecting optical system 5 could be implemented in a separate package, with electronic means 1 distributed in all those functional subsystems.

The imaging LIDAR system 100 further comprises an optical narrow band-pass interferential filter 6 configured to filter out ambient scattered light of wavelengths not corresponding to the laser wavelength. In general, the interferential filter 6 can be placed at any position, from the entrance of the collecting optical system 5 to just in front of the photodetector 8. A preferred position is where the transmitted optical rays present the smaller span of incidence angles, to minimize the angular-dependence effect. In the example of Fig. 1, the interferential filter 6 is disposed right at the entrance of the collecting optical system 5, before the imaging optical elements. In this case, the span of incidence angles corresponds to the angular field of view of the LIDAR system 100.

Advantageously, the LIDAR system 100 may further comprise a non-uniform attenuation filter 7 with a spatially modulated attenuation factor.

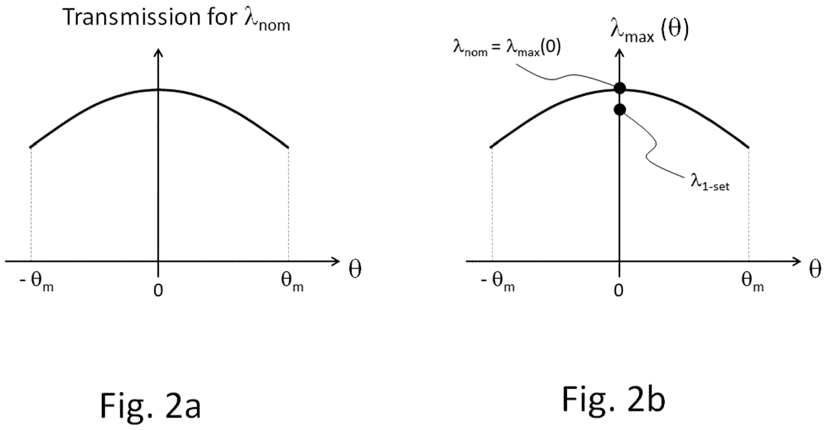

A method of the invention provides a strategy for reducing the transmission contrast across the field-of-view produced by the narrow bandpass interferential filter 6. The strategy is explained with reference to Figure 2a and 2b.

Figure 2a represents qualitatively the transmission of a narrow bandpass interferential filter as a function of the angle of incidence θ, for a collimated beam of wavelength λₙₒₘ, equal to the nominal central wavelength of the filter. Standard interferential filters are usually designed for normal incidence. In this case, the beam of nominal wavelength λₙₒₘ will have a maximum transmission under normal incidence (θ = 0), but the transmission decays as the incidence angle θ deviates from the normal.

In an imaging LIDAR application, the field-of-view of the detection unit may comprise full-angles up to 120°, typically up to 30°. The maximum angle defining the field-of-view of the LIDAR system does not necessarily correspond to the maximum angle of incidence θₘ on the photodetector 8 or on the interferential filter 6. Indeed, the angles of incidence on the photodetector 8 are fundamentally defined by the design of the imaging optics 5, which can significantly variate for different LIDAR systems. Often, the collecting optical system 5 may include a telescopic arrangement that will image a large, distant scene onto a small and near photodetector, and produce strongly convergent beams defining large angles of incidence. In the example of Fig. 1, however, with the interferential filter 6 placed before the imaging elements of the collecting optical system 5, the maximum angle of incidence θₘ does correspond to the angular field of the imaging LIDAR system 100.

As an example, a particular embodiment of a LIDAR system 100 according to the invention can be characterized by an angular field-of-view covering a full angle of 15° (i.e. θₘ = 7.5°). Within this range, the transmission of a narrow bandpass interferential filter, centred at λₙₒₘ = 532 nm with a nominal bandwidth of 1nm (full-width at half-maximum), varies from a maximum of 98%, at normal incidence to 50% at θ = 5°.

In an interferential filter, for any given angle of incidence θ, there is a wavelength that is optimally transmitted λₘₐₓ(θ). For normal incidence, this wavelength of maximum transmission λₘₐₓ(θ) usually corresponds to the nominal wavelength of the filter λₙₒₘ, i.e., λₘₐₓ(0) = λₙₒₘ. For other incidence angles, the optimally transmitted wavelength is shifted to lower values. This dependency is represented in Figure 2b.

According to a method of the invention, in order to reduce the difference of transmission across the range of incidence angles (-θₘ to θₘ), the wavelength of the laser is set, not to the nominal wavelength of maximum transmission in normal incidence conditions λₘₐₓ(0), but to a lower value λ₁₋ₛₑₜ which roughly corresponds to a mean value of the angle-dependent wavelength of maximum transmission λₘₐₓ(θ), averaged across the angular range -θₘ to θₘ.

It is worth pointing out that the mentioned wavelength of maximum transmission in normal incidence conditions λₘₐₓ(0) does not necessarily correspond to the filter's nominal wavelength λₙₒₘ. Indeed, the nominal wavelength λₙₒₘ is typically specified for standard room temperature conditions, which do not necessarily correspond to the outdoor conditions.

Also, the nominal wavelength of the laser 2 may be affected by environmental and other operation conditions. Therefore, in order to implement the method of the invention, it is convenient to adjust the matching of the wavelengths with a calibration routine that can be performed on the spot before starting the measurements.

As an example of such calibration routine, the imaging LIDAR system 100 can be operated to obtain an image 121 of a scene or a calibration target and then, the laser wavelength is scanned to determine a setpoint for the laser wavelength (λ₁₋ₛₑₜ), which provides an optimal contrast across the image 121 acquired by the photodetector 8.

Another example of such calibration routine can take advantage of the fact that the central wavelength of the optical band transmitted by the interferential filter can also be tuned in several manners. It is thus possible to scan the central wavelength of the filter 6 to determine a setpoint for the filter central wavelength (λ₂₋ₛₑₜ), which provides an optimal contrast across the image 121 acquired by the photodetector 8.

The identification of the optimal wavelengths or operating setpoints (λ₁₋ₛₑₜ and/or λ₂₋ₛₑₜ) can be either performed by an operator of the LIDAR system, or by an automated control. For example, an image processing algorithm could be implemented to determine the optimal operating setpoint, such as to minimize the intensity contrast across the image acquired by the photodetector 8.

It is worth mentioning that, an absolute measurement of the wavelengths is not necessary to implement the method.

Once the calibration routine has been completed, the imaging LIDAR system can be operated in a regime with overall lower sensitivity to the angle of incidence across the field of view.

On the basis of experimentation, for one particular embodiment tested by the inventors with a 1 nm bandwidth interferential filter (a common filter bandwidth for laser line filtering), it was determined that a convenient setpoint for the wavelength of the laser (λ₁₋ₛₑₜ) could be defined between 0.1 nm and 2 nm below the nominal wavelength λₙₒₘ of the interference filter. More preferably, the setpoint for the wavelength of the laser (λ₁₋ₛₑₜ) may be in the range between 0.2 and 1 nm below the nominal wavelength λₙₒₘ of the interference filter.

Depending on the nature of the laser source 2, the wavelength of the laser can be tuned, for example, by controlling a temperature of the laser source 2, or through an intracavity actuator such as an orientable diffraction grating or prism, or by controlling the driving current of the laser. Wavelength adjustment actuators are commonly available in most laser sources. The control of the laser wavelength has been generically represented in Fig. 1 by the arrow 33.

In one embodiment of the invention concerning a flash-imaging LIDAR (pulsed illumination) thoroughly tested by the inventors, the monochromatic laser source is a commercial pulsed fiber laser amplifier presenting a spectral linewidth of 0.05 nm at a central wavelength of 532 ± 0.5 nm. The wavelength of this examplary source may be tuned through a temperature control acting on the seed diode within a range of 1 nm.

This type of source, can advantageously generate short pulses with durations between 0.4 ns and 5 ns. Such short pulses are important to guarantee a good depth resolution of the LIDAR.

The energy of the laser pulses is also important in flash-imaging applications when large fields of view must be monitored from a relatively large distance, for example in airborne or spatial applications, or when the light must propagate through turbid and absorbing media such as water, in bathymetry applications. In these cases, pulse energies in the micro-Joule (µJ) range are necessary, for example between 0.2 µJ and 20 µJ, or higher. Considering pulse durations of typically 1 ns, these energies correspond to average pulse powers in the order of kilo-watts (kW), for example between 0.2 kW and 20 kW, or higher. It is clear that, on top of the complexity of their construction, the polychromatic sources described in the prior art document WO2020/243130A1 are not adapted to work in this power and short pulses regime and are therefore not suitable for the applications mentioned above. Furthermore, should this prior system be adapted with appropriate light sources (delivering the required high power), it would lead to a cumbersome system which would then not be adapted to be used in connection with specific applications where the dimensions and weight of the system matter.

The spectral properties of an interferential filter may be tuned by means of electric actuators such as piezo-electric actuators applying pressure on the thin layers that constitute the interferential structure, or by electro-optic modification of the refraction index of such thin layers. However, more conveniently, the spectral properties of the interferential filter may be controlled by temperature, which also affects the thickness of the layers that constitute the interferential structure. A temperature control system may comprise, for example a Peltier element for heating or cooling, or an electric resistor for heating the filter, or its mounting structure. The control of the spectral properties of the interferential filter 6 has been generically represented in Fig. 1 by the arrow 34.

The wavelength optimal settings according to the invention may be preconfigured by factory-calibrated set-points. In this case, no calibration procedure would be needed to operate the imaging LIDAR according to the invention. This would however limit the robustness of the system in regard to changing environmental conditions or aging of its components.

Conveniently, the wavelength operating setpoints may be determined at any given time by the users, by executing a calibration routine as explained above. The calibration routine may be performed by placing a calibration target in front of the system 100. The calibration target could advantageously comprise a flat and homogenous diffuse-reflecting surface covering the whole field of view of the imaging LIDAR system 100. A target in the form of a homogeneous flat surface has the advantage of providing an ideal reference for judging the homogeneity of the collecting efficiency across the field of view.

In some cases, when the operating conditions do not allow for placing a calibration target in front of the LIDAR system 100, the operating setpoints may be determined on the spot with regard to the scene 120 that will be monitored with the LIDAR system 100. The operating setpoints could be adjusted according to the characteristics of that monitored scene 120 and the intended application.

Advantageously, once the operating setpoints have been determined, the laser wavelength and filter controls 33, 34, may be indirectly stabilized, for example by stabilizing the set current of the laser source 2, or a temperature measured at the laser source 2, or a temperature measured on the filter 6, or any combination of such wavelength-determining parameters. Such simple stabilization schemes would allow continuous operation of the LIDAR system, without need for frequent re-optimization of the setpoints.

The appropriate timing between recalibration of the operating setpoints will strongly depend on the variability of the operating environment, as well as on the implemented stabilization feedback controls in the LIDAR system. It can be some tens of minutes, hours, months or might never be necessary in case of stable operating conditions when factory-calibrated setpoints and appropriate stabilization controls are provided.

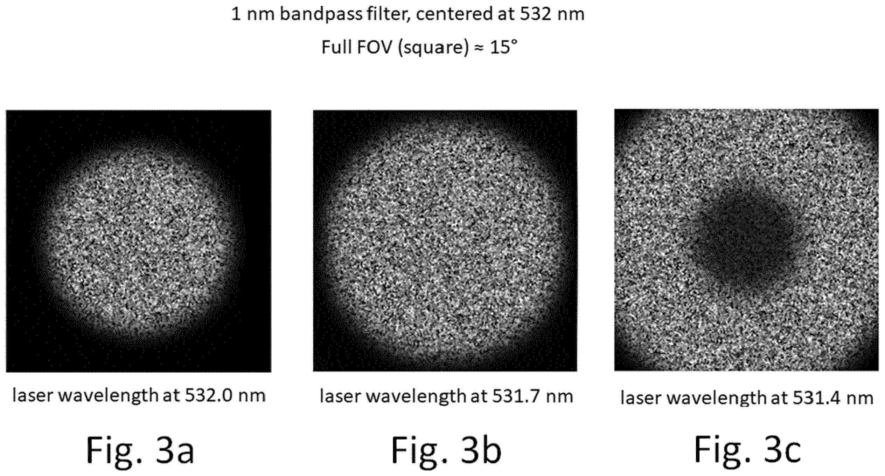

Figure 3 shows an illustration of the effect of a simulation of the method of the invention corresponding to an image acquired by a LIDAR system placed at a distance of 4 m in front of a flat white wall (calibration target). The images 3a to 3c present only an intensity map of the reflected light, like in a simple photograph (depth information not shown). The random pixels which are visible in the clear parts of the image are typical of laser speckle. The field of view (height and width) imaged by the photodetector corresponds to approximately 15° (full angle).

In Fig. 3a the wavelength of the laser was set to provide the maximum transmission at normal incidence (λ₁₋ₛₑₜ = λₘₐₓ(0)). This is the laser wavelength which maximizes the average signal measured in the central pixels of the detector. The dark ring around the borders of the image is the consequence of the mismatch between the laser wavelength and the filter transmission under a larger angle of incidence (vignetting effect).

Fig. 3b corresponds to a laser wavelength tuned 0.3nm below that of Fig. 3a. The width of the dark ring in the borders of the field of view is reduced, while the signal at the centre of the detector loses some amplitude, because the wavelength of the laser is no longer optimal for transmission under normal incidence.

Fig. 3c corresponds to a laser wavelength tuned 0.6nm below that of Fig. 3a. The visible field has further extended with the peripheral dark ring limited now to the corners of the detector. On the other hand, the transmission under normal incidence has been sensibly degraded and a dark spot starts building up at the centre of the detector.

The optimal operating conditions depend on the LIDAR system and the requirements of the application. In the example of Fig. 3 it could be better to work under the conditions of Fig. 3c, to make use of the largest possible field of view, whereas for some applications the compromise of Fig. 3b could be more appropriate, with a somewhat limited field of view but no important degradation of the signal at the centre.

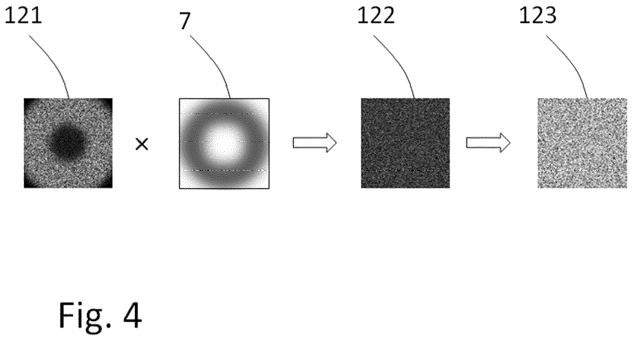

Advantageously, an additional filter 7 may be further implemented in the LIDAR system 100 to correct the residual contrast across the field-of-view obtained after adjusting the wavelength setpoints. This additional correction is explained with reference to Figure 4. An image 121 is shown, presenting a donut shaped amplitude profile as in the example of Fig. 3c. The filter 7 is advantageously implemented with a non-uniform attenuation profile which is roughly complementary to the non-uniform transmission profile resulting from the spectral filtering of the interferential filter 6 in the condition of optimal wavelength tuning described above.

As illustrated in Fig. 4, filtering the image 121 with the complementary non-uniform filter 7, results in a new image 122 with a uniform attenuation profile. Obviously, the overall signal amplitude is reduced with this additional correction, but this can often be compensated with an increased gain in the detection electronics of the photodetector 8. Alternatively, or in addition, the amplitude of the collected optical signal may also be increased, for example, by opening an aperture in the collecting optical system 5, to obtain a final image 123 of a convenient amplitude and featuring a substantially homogeneous profile.

As represented in Figure 1, the additional filter 7 may conveniently be placed close to the photodetector 8. Other positions in the optical system may also be conceived as long as the effect of spatial complementary attenuation compensating the interferential filter 6 can be achieved.

The additional filter 7 may be spectrally insensitive. Indeed, the transmission through the interferential filter 6 already results in a highly monochromatic signal. The additional filter 7 may be implemented as a neutral density variable filter consisting, for example in a transparent substrate covered with a variable-density semitransparent metallic coating. Spatially variable absorptive filters may also be used.

More conveniently, for higher flexibility of the system, the additional filter 7 may be an adjustable filter, for example based on a spatial light modulator, or a liquid crystal display. Such adjustable filter can be manually controlled by an operator of the LIDAR system, or automatically adjusted by a control signal 35, in order to provide an optimally homogenous intensity of the field-of-view.

In some cases, the homogenizing function of the additional filter 7 may be implemented with a purely electronic approach, by adapting the individual read-out gain of the different pixels of the photodetector 8.

In some cases according to the LIDAR system design, the sole implementation of the methods described above in relation to the non-uniform additional filter 7 could be enough to generate a homogenous image 121, without any particular optimization of the wavelength setpoints between the laser source 2 and the interferential filter 6.

Although the invention has been described in terms of particular embodiments, various modifications are possible without departing from the scope of the invention as defined in the appended claims.

## Claims

1. Imaging LIDAR system (100) **characterized in that** it comprises
- a unique light source consisting of a monochromatic laser source (2), emitting a laser signal having a first wavelength,
- a projection system (3) configured to project said laser signal as a divergent beam (20) towards a monitored scene (120),
- a collecting optical system (5) configured to collect a reflected laser signal (21) from said monitored scene (120) and to produce an image (121) of said monitored scene (120) on an imaging photodetector (8) comprising a plurality of pixels,
- an optical band-pass interferential filter (6) having a characteristic second wavelength corresponding to the centre of the filter transmission band in normal incidence conditions, said first wavelength being lower than said second wavelength, and said filter being disposed along the optical path, between the monitored scene (120) and the imaging photodetector (8).

2. Imaging LIDAR system according to claim 1 wherein the difference between said first wavelength and said second wavelength is in a range from 0.1 to 2 nm, preferably between 0.2 and 1 nm.

3. Imaging LIDAR system according to claims 1 or 2, further comprising an adjusting system to adjust said first wavelength and/or an adjusting system to adjust said second wavelength.

4. Imaging LIDAR system according to claim 3, wherein said adjusting system for adjusting said first wavelength comprises any of:
- a temperature control of the monochromatic laser source (2), or
- an intracavity actuator within the monochromatic laser source (2) such as an orientable diffraction grating or prism, or
- a driving current control of the laser source (2).

5. Imaging LIDAR system according to claim 3 or 4, wherein said adjusting system for adjusting said second wavelength comprises any of:
- Electro-mechanic actuators applying pressure on the interferential filter (6), or
- Electro-optic actuators controlling the index of refraction of the layers constituting the interferential filter (6), or
- a temperature control of the interferential filter (6).

6. Imaging LIDAR system according to any of the preceding claims further comprising an additional optical filter (7) disposed along the optical path, between the monitored scene (120) and the imaging photodetector (8), and featuring a spatially modulated transmittance which is complementary to a non-uniform transmission profile resulting from the spectral filtering of the interferential filter (6), such as to obtain an overall substantially homogeneous transmission of the laser signal which is collected across the field of view of the imaging LIDAR system (100).

7. Imaging LIDAR system according to claim 6 wherein the additional optical filter (7) is one of :
- a neutral density variable reflective filter, or
- a neutral density variable absorptive filter, or
- an adjustable spatial light modulator, or
- an adjustable liquid crystal display.

8. Imaging LIDAR system according to claims 1 to 5, wherein it is arranged such that the individual read-out gain of the different pixels of the imaging photodetector (8) can be adjusted such as to compensate a non-uniform transmission profile resulting from the spectral filtering of the interferential filter (6), and to obtain an overall substantially homogeneous transmission of the laser signal which is collected across the field of view of the imaging LIDAR system (100).

9. Imaging LIDAR system according to any of the preceding claims, **characterized in that** said monochromatic laser source (2) is configured so as to be able to generate pulses having a duration comprised between 0.4 ns and 5 ns and, preferably, a pulse energy in the micro-Joule (µJ) range, more preferably between 0.2 µJ and 20 µJ.

10. A method of operating an imaging LIDAR system (100) comprising
- a unique light source consisting of a monochromatic laser source (2), emitting a laser signal having a first wavelength,
- a projection system (3) configured to project said laser signal as a divergent beam (20) towards a monitored scene (120),
- a collecting optical system (5) configured to collect a reflected laser signal (21) from said monitored scene (120) and to produce an image (121) of said monitored scene (120) on an imaging photodetector (8) comprising a plurality of pixels,
- an optical band-pass interferential filter (6) having a characteristic second wavelength corresponding to the centre of the filter transmission band, said filter being disposed along the optical path, between the monitored scene (120) and the imaging photodetector (8), and
- an adjusting system to adjust said first wavelength and/or an adjusting system to adjust said second wavelength,
**characterized in that** the method comprises the step of
- adjusting said first wavelength and/or said second wavelength such that said first wavelength is lower than said second wavelength.

11. Method according to claim 10, wherein the difference between said first wavelength and said second wavelength is adjusted in a range from 0.1 to 2 nm, preferably between 0.2 and 1 nm.

12. Method according to claims 10 or 11, wherein adjusting said first wavelength and/or said second wavelength comprises the steps of:
- operating the imaging LIDAR system (100) to obtain an image (121) of a scene or of a calibration target, then
- scanning said first wavelength and/or said second wavelength to identify an operating setpoint of said first and/or said second wavelength which provides an optimal intensity contrast across the image (121) acquired by the imaging photodetector (8).

13. Method according to claim 12, wherein an optimization criterion of said optimal intensity contrast is defined by an operator of the imaging LIDAR system (100).

14. Method according to claim 12, wherein an optimization criterion of said optimal intensity contrast is defined by an image processing algorithm.

15. Method according to claims 10 to 12, wherein the imaging LIDAR system (100) further comprises an additional optical filter (7), disposed along the optical path, between the monitored scene (120) and the imaging photodetector (8), said additional optical filter (7) featuring a spatially modulated transmittance which can be adjusted, and wherein the method further comprises a step of adjusting the transmittance of said additional optical filter (7) to obtain an overall substantially homogeneous transmission of the laser signal which is collected across the field of view of the imaging LIDAR system (100).

16. Method according to claims 10 to 12, further comprising a step of adjusting the individual read-out gain of the different pixels of the imaging photodetector (8) to obtain an overall substantially homogeneous transmission of the laser signal which is collected across the field of view of the imaging LIDAR system (100).

17. Imaging LIDAR system (100) comprising
- a unique light source consisting of a monochromatic laser source (2), emitting a laser signal having a first wavelength,
- a projection system (3) configured to project said laser signal as a divergent beam (20) towards a monitored scene (120),
- a collecting optical system (5) configured to collect a reflected laser signal (21) from said monitored scene (120) and to produce an image (121) of said monitored scene (120) on an imaging photodetector (8) comprising a plurality of pixels,
- an optical band-pass interferential filter (6) having a characteristic transmission band encompassing said first wavelength, said filter being disposed along the optical path, between the monitored scene (120) and the imaging photodetector (8),
**characterized in that**
the imaging LIDAR system (100) further comprises an additional optical filter (7) disposed along the optical path, between the monitored scene (120) and the imaging photodetector (8), and featuring a spatially modulated transmittance which is complementary to a non-uniform transmission profile resulting from the spectral filtering of the interferential filter (6), such as to obtain an overall substantially homogeneous transmission of the laser signal which is collected across the field of view of the imaging LIDAR system (100).

18. Imaging LIDAR system (100) comprising
- a unique light source consisting of a monochromatic laser source (2), emitting a laser signal having a first wavelength,
- a projection system (3) configured to project said laser signal as a divergent beam (20) towards a monitored scene (120),
- a collecting optical system (5) configured to collect a reflected laser signal (21) from said monitored scene (120) and to produce an image (121) of said monitored scene (120) on an imaging photodetector (8) comprising a plurality of pixels,
- an optical band-pass interferential filter (6) having a characteristic transmission band encompassing said first wavelength, said filter being disposed along the optical path, between the monitored scene (120) and the imaging photodetector (8),
**characterized in that**
the individual read-out gain of the different pixels of the imaging photodetector (8) can be adjusted such as to compensate a non-uniform transmission profile resulting from the spectral filtering of the interferential filter (6), and to obtain an overall substantially homogeneous transmission of the laser signal which is collected across the field of view of the imaging LIDAR system (100).

19. Imaging LIDAR system according to claim 17 or 18, **characterized in that** said monochromatic laser source (2) is configured so as to be able to generate pulses having a duration comprised between 0.4 ns and 5 ns and, preferably, a pulse energy in the micro-Joule (µJ) range, more preferably between 0.2 µJ and 20 µJ.
